# EUROPÄISCHE PATENTANMELDUNG

(11) **EP 2 532 218 A1**
(43) Veröffentlichungstag der Anmeldung: **12.12.2012**
(21) Anmeldenummer: 12401108.1
(22) Anmeldetag: 01.06.2012
(51) Int. Cl.: A01B 69/02, A01C 7/08

(54) **Verfahren zum Anlegen von Fahrgassen**

(30) Priorität: 07.06.2011 DE 102011050888
(71) Anmelder: Amazonen-Werke H. Dreyer GmbH & Co. KG, 49205 Hasbergen (DE)
(72) Erfinder: Kötter, Heiner, 49086 Osnabrück (DE)

(57) **Zusammenfassung**

Vorrichtung zum Anlegen von Markierungsstreifen (1, 5) mit einer Sämaschine (2), die einen Vorratsbehälter und Dosierorgane aufweist, die das sich im Vorratsbehälter befindliche Saatgut in einstellbaren Mengen Säelementen zuführen, die dieses Saatgut in Reihen in den Boden ablegen, wobei in periodischer Wiederkehr in Abständen die Saatgutzufuhr zu bestimmten Säelementen durch über eine Schaltvorrichtung zu betätigende Saatgutzufuhrunterbrechungselemente abschaltbar ist, so dass Markierungsstreifen (1, 5) entstehen, die für die Laufräder von Fahrzeugen (4, 6, 7) für nachfolgende Pflanzenschutz- und/oder Düngemaßnahmen zum Befahren vorgesehen sind. Die Saatgutzufuhrunterbrechungselemente sind beliebigen Säelementen zuordbar, so dass beliebige Periodizitäten für Markierungsstreifen (1, 5) erzeugbar sind, wobei die Perioden, in der Markierungsstreifen (1, 5) erstellt werden, unabhängig von der Arbeitsbreite der Sämaschine (2) sind.

## Beschreibung

Die Erfindung betrifft ein Verfahren zum Anlegen von Fahrgassen auf landwirtschaftlichen Flächen gemäß des Oberbegriffes des Patentanspruches 1.

In der EP 0 570 792 A1 wird ein Verfahren zum Anlegen von Markierungsstreifen mit einer Sämaschine offenbart, wobei die Markierungsstreifen in periodischer Wiederkehr in Abständen, die einem Vielfachen der Arbeitsbreite der Sämaschine entsprechen, erzeugt werden. Die Markierungsstreifen werden erzeugt, indem die Saatgutzufuhr zu bestimmten Säelementen über eine Schaltvorrichtung zu geeigneten Zeitpunkten unterbrochen wird. Beispielsweise durch das intervallweise Unterbrechen der Saatgutzufuhr können voneinander unterscheidbare Markierungsstreifen erzeugt werden.

Eine Markierung von Fahrgassen mittels Markierungsstreifen, ist also nur möglich, für Fahrgassen deren Abstand einem ganzen Vielfachen der Arbeitsbreite der Sämaschine entspricht.

Die DE-OS 40 12 395 A1 beschreibt ein Verfahren, bei dem landwirtschaftliche Verteilmaschinen abhängig von der jeweils befahrenen Fahrgasse steuerbar sind, wobei die Steuerung davon abhängig ist, ob die landwirtschaftliche Fläche mit der landwirtschaftlichen Verteilmaschine abzuarbeiten ist, indem jede Fahrgasse, jede zweite, jede dritte, jede vierte und/oder etc. angefahren wird.

Hierbei besteht zwischen zwei benachbarten Fahrgassen immer der gleiche Abstand.

Fahrgassensysteme, bei denen die Fahrgassen Abstände aufweisen, die einem Vielfachen der Arbeitsbreite der verwendeten Sämaschine entsprechen, sind sinnvoll, wenn die Arbeitsbreiten der später auf der landwirtschaftlichen Fläche verwendeten landwirtschaftlichen Geräte, beispielsweise Düngerstreuer, Feldspritzen etc., ebenfalls einem ganzen Vielfachen der Arbeitsbreite der Sämaschine entsprechen. Ist dies nicht der Fall, so kann die Arbeitsbreite der landwirtschaftlichen Geräte nicht vollständig ausgenutzt werden. Dadurch entsteht ein größerer Zeitaufwand für die Bearbeitung der landwirtschaftlichen Fläche, der mit Kostenerhöhungen einhergeht.

Der Erfindung liegt die Aufgabe zugrunde hier in einfacher Weise Abhilfe zu schaffen.

Diese Aufgabe wird erfindungsgemäß durch das Kennzeichen des Patentanspruches 1 gelöst. Dadurch sind Fahrgassensysteme beliebiger Periodizität, d.h. mit beliebigem Abstand zwischen den Fahrgassen, erzeugbar, indem die Saatgutzufuhr zu beliebig festlegbaren Säelementen in beliebig festlegbarer Weise unterbrechbar ist. Fahrgassen sind dementsprechend so angelegbar, dass die landwirtschaftliche Fläche später zeitsparend ökonomisch mittels landwirtschaftlicher Geräte unterschiedlicher Arbeitsbreite, beispielsweise Düngerstreuer, Feldspritzen etc., bearbeitbar ist, indem die Fahrgassen so angelegt werden, dass sie der Arbeitsbreite der landwirtschaftlichen Geräte optimal angepasst sind. Hierzu müssen die Arbeitsbreiten der verschiedenen landwirtschaftlichen Geräte kein ganzzahliges Vielfaches der Arbeitsbreite der Sämaschine sein.

In einer vorteilhaften Ausführung der Erfindung sind in einem Arbeitsgang gleichzeitig Markierungsstreifen unterschiedlicher Periodizität erzeugbar. Dadurch können unterschiedliche Arbeitsbreiten unterschiedlicher landwirtschaftlicher Geräte berücksichtigt werden, insbesondere bei unterschiedlichen Arbeitsbreiten, die kein Vielfaches voneinander sind.

In einer vorteilhaften Ausführung der Erfindung werden unterschiedliche Fahrgassenabstände markierende Markierungsstreifen in leichter Weise unterscheidbar erzeugt, indem unterschiedliche Sämuster mittels gezielter Steuerung der Saatgutzufuhrunterbrechungselemente erzeugt werden. Insbesondere sind Markierungsstreifen vollständig von Saatgut freihaltbar und/oder intervallweise freihaltbar, so dass ein festlegbares, von anderen Sämustern unterscheidbares, Sämuster erzeugt wird.

In einer vorteilhaften Ausführung der Erfindung sind Markierungsstreifen unterschiedlicher Periodizität farblich unterschiedlich kennzeichenbar. Insbesondere kann dadurch die Verwechslung von Markierungsstreifen vermieden werden, die intervallweise mit unterschiedlichen, schwer unterscheidbaren Intervallen von Saatgut freigehalten sind.

In einer vorteilhaften Ausführung der Erfindung sind Markierungsstreifen unterschiedlicher Periodizität durch die Aussaat unterschiedlicher Saatgüter kennzeichenbar. Insbesondere kann dadurch die Verwechslung von Markierungsstreifen vermieden werden, die intervallweise mit unterschiedlichen, schwer unterscheidbaren Intervallen von Saatgut freigehalten sind.

Besonders vorteilhaft ist eine Ausführung der Erfindung, bei der voneinander unterschiedliche und/oder unabhängige Periodizitäten für Markierungsstreifen über ein Bedienelement eines Bordcomputers in einem Speicherelement des Bordcomputers hinterlegbar sind. Beispielsweise ist dadurch jederzeit eine Steuerung der Sämaschine derart durchführbar, dass die gewünschten Markierungsstreifen mit der gewünschten Periodizität angelegt werden. Durch das Hinterlegen der Informationen in einem Speicherelement müssen die Abstände für die Markierungsstreifen nicht bei jedem Arbeitsgang erneut eingegeben werden.

In einer vorteilhaften Ausführung der Erfindung sind nicht nur Bereiche auf der landwirtschaftlichen Fläche von Saatgut freihaltbar, die von den Laufrädern von Fahrzeugen für nachfolgende Pflanzenschutz- und/oder Düngemaßnahmen überfahren werden, sondern insbesondere auch der Bereich zwischen diesen Laufrädern. Bei der Verwendung beispielsweise von landwirtschaftlichen Bewässerungsgeräten und/oder anderen Geräten, die zwischen ihren Laufrädern einen geringen Abstand zum Boden aufweisen und dadurch den unter dem Fahrzeug befindlichen Pflanzenbestand beschädigen könnten, werden dadurch keine Pflanzenbestände zerstört. Eine Ausgestaltung von derartigen breiteren Markierungsstreifen geht demnach mit einer Ersparnis von Saatgut einher.

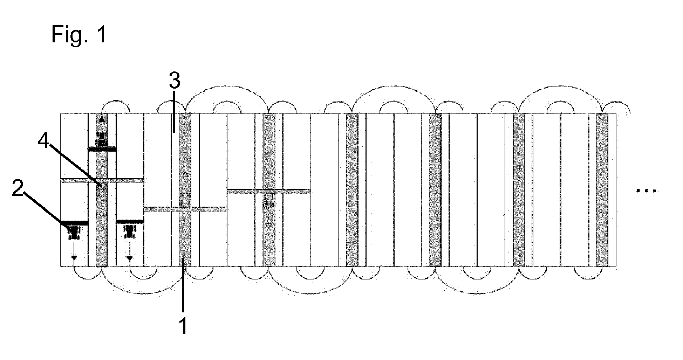

Weitere Einzelheiten der Erfindung sind der Beispielsbeschreibung und der Zeichnungen zu entnehmen. Hierbei zeigen
- Fig. 1: eine Markierungsstreifen für ein Fahrgassensystem erzeugende Sämaschine, wobei die Markierungsstreifen in festgelegten Bearbeitungsreihen erzeugt werden, wobei die Markierungsstreifen einen Abstand aufweisen, der einem Vielfachen der Arbeitsbreite der Sämaschine entspricht, und ein landwirtschaftliches Gerät mit einer Arbeitsbreite, die einem Vielfachen der Arbeitsbreite der Sämaschine entspricht,

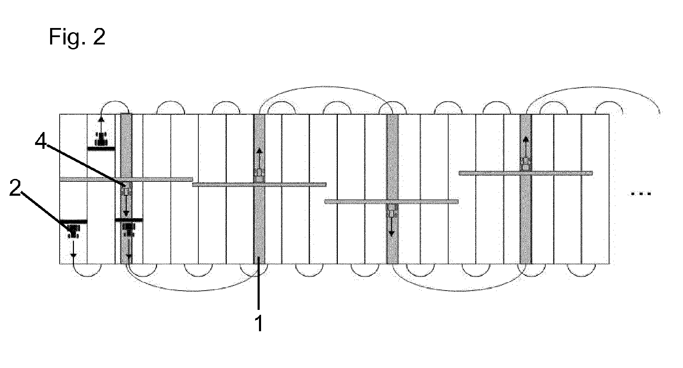

- Fig. 2: eine Markierungsstreifen für ein Fahrgassensystem erzeugende Sämaschine, wobei die Markierungsstreifen mit festgelegten Abständen erzeugt werden, wobei die Markierungsstreifen einen Abstand aufweisen, der nicht einem Vielfachen der Arbeitsbreite der Sämaschine entspricht, und ein landwirtschaftliches Gerät mit einer Arbeitsbreite, die nicht einem Vielfachen der Arbeitsbreite der Sämaschine entspricht,

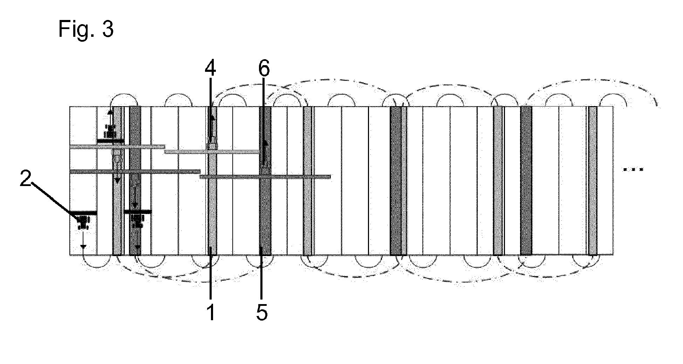

- Fig. 3: eine Markierungsstreifen für ein Fahrgassensystem erzeugende Sämaschine, wobei voneinander unterscheidbare Markierungsstreifen unterschiedlicher Periodizität mit festgelegten Abständen erzeugt werden, wobei die Markierungsstreifen Abstände aufweisen, die nicht einem Vielfachen der Arbeitsbreite der Sämaschine entsprechen, und zwei landwirtschaftliches Geräte mit unterschiedlichen Arbeitsbreiten, die nicht einem Vielfachen der Arbeitsbreite der Sämaschine entsprechen,

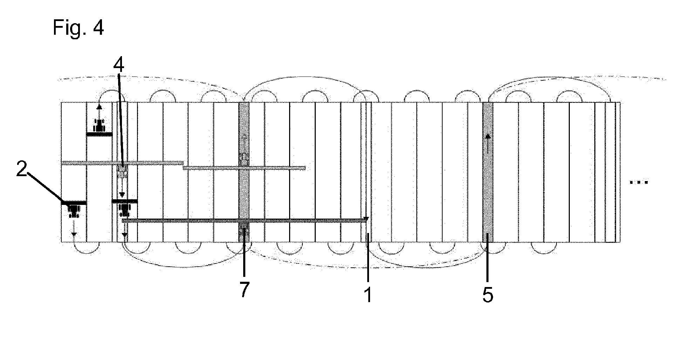

- Fig. 4: eine Markierungsstreifen für ein Fahrgassensystem erzeugende Sämaschine, wobei voneinander unterscheidbare Markierungsstreifen mit festgelegten Abständen erzeugt werden, wobei die Markierungsstreifen Abstände aufweisen, die nicht einem Vielfachen der Arbeitsbreite der Sämaschine entsprechen, und zwei landwirtschaftliches Geräte mit unterschiedlichen Arbeitsbreiten, die nicht einem Vielfachen der Arbeitsbreite der Sämaschine entsprechen, wobei das landwirtschaftliche Gerät mit der größeren Arbeitsbreite zwischen seinen Laufrädern einen geringen Bodenabstand aufweist.

Fig. 1 zeigt eine Markierungsstreifen 1 für ein Fahrgassensystem erzeugende Sämaschine 2, wobei die Markierungsstreifen in festgelegten Bearbeitungsreihen 3 erzeugt werden, wobei die Markierungsstreifen 1 einen Abstand aufweisen, der einem Vielfachen der Arbeitsbreite der Sämaschine 2 entspricht. Dieses Vorgehen entspricht dem Stand der Technik. Die Markierungsstreifen 1 werden dabei durch geeignete Steuerung der Saatgutzufuhrunterbrechungselemente der Sämaschine 2 erzeugt.

In späteren Arbeitsgängen mit landwirtschaftlichen Geräten 4, beispielsweise einer landwirtschaftlichen Feldspritze, werden die angelegten Fahrgassen angefahren. Da die Arbeitsbreite des hier verwendeten landwirtschaftlichen Gerätes 4 genau dem Dreifachen der Arbeitsbreite der Sämaschine 2 entspricht, wird die zweite Bearbeitungsreihe 3 der Sämaschine 2 und von da an jede dritte Bearbeitungsreihe 3 mit Markierungsstreifen 1 als Fahrgasse Markiert. Mit dem landwirtschaftlichen Gerät 4 ist nun jede Fahrgasse anfahrbar, wodurch nach dem Anfahren jeder Fahrgasse die komplette landwirtschaftliche Fläche bearbeitet ist.

Fig. 2 zeigt eine erfindungsgemäß Markierungsstreifen 1 für ein Fahrgassensystem erzeugende Sämaschine 2, wobei die Markierungsstreifen 1 mit festgelegten Abständen erzeugt werden, wobei die Markierungsstreifen 1 einen Abstand aufweisen, der nicht einem Vielfachen der Arbeitsbreite der Sämaschine 2 entspricht. Die Markierungsstreifen 1 werden dabei durch geeignete Steuerung der Saatgutzufuhrunterbrechungselemente der Sämaschine 2 erzeugt.

In späteren Arbeitsgängen mit landwirtschaftlichen Geräten 4, beispielsweise einer landwirtschaftlichen Feldspritze, werden die angelegten Fahrgassen angefahren. Da die Arbeitsbreite des hier verwendeten landwirtschaftlichen Gerätes 4 keinem vielfachem der Arbeitsbreite der Sämaschine 2 entspricht, könnte eine Bearbeitung der Fläche mit einem Fahrgassensystem nach Fig. 1 nur lückenhaft oder mit doppelt bearbeiteten Teilflächen erfolgen. Durch das gemäß Fig. 2 angelegte Fahrgassensystem kann die landwirtschaftliche Fläche jedoch in ökonomischer Weise bearbeitet werden, ohne dass Lücken und/oder doppelt bearbeitete Teilflächen entstehen. Nach dem Anfahren jeder Fahrgasse ist die landwirtschaftliche Fläche vollständig bearbeitet.

Fig. 3 zeigt eine erfindungsgemäß Markierungsstreifen 1 für ein Fahrgassensystem erzeugende Sämaschine 2, wobei voneinander unterscheidbare Markierungsstreifen 1, 5 unterschiedlicher Periodizität mit festgelegten Abständen erzeugt werden. Die Markierungsstreifen 1 weisen dabei Abstände auf, die nicht einem Vielfachen der Arbeitsbreite der Sämaschine 2 entsprechen, und zwei landwirtschaftliches Geräte 4, 6 mit unterschiedlichen Arbeitsbreiten, die nicht einem Vielfachen der Arbeitsbreite der Sämaschine 2 entsprechen. Die Markierungsstreifen 1, 5 werden dabei durch geeignete Steuerung der Saatgutzufuhrunterbrechungselemente der Sämaschine 2 erzeugt.

In späteren Arbeitsgängen mit landwirtschaftlichen Geräten 4, 5, beispielsweise einer landwirtschaftlichen Feldspritze mit einer Arbeitsbreite, die nicht einem Vielfachen der Arbeitsbreite der Sämaschine 2 entspricht und einem Düngestreuer mit einer im Vergleich zur Feldspritze kleineren Arbeitsbreite, die nicht einem Vielfachen der Arbeitsbreite der Sämaschine 2 entspricht, werden die der jeweiligen Arbeitsbreite entsprechenden Fahrgassen angefahren. Dabei wird anhand unterschiedlicher Sämuster auf den Markierungsstreifen 1 unterschieden, ob eine Fahrgasse für die landwirtschaftliche Feldspritze oder für den Düngestreuer vorgesehen ist. Da die Arbeitsbreite der hier verwendeten landwirtschaftlichen Geräte 4, 6 keinem vielfachem der Arbeitsbreite der Sämaschine entsprechen, könnte eine Bearbeitung der Fläche mit einem Fahrgassensystem nach Fig. 1 in beiden Fällen nur lückenhaft oder mit doppelt bearbeiteten Teilflächen erfolgen. Durch das gemäß Fig. 3 angelegte Fahrgassensystem kann die landwirtschaftliche Fläche jedoch mit beiden landwirtschaftlichen Geräten 4, 6 in ökonomischer Weise bearbeitet werden, ohne dass Lücken und/oder doppelt bearbeitete Teilflächen entstehen. Nach dem Anfahren jeder jeweils vorgesehenen Fahrgasse ist die landwirtschaftliche Fläche vollständig bearbeitet.

Fig. 4 zeigt eine erfindungsgemäß Markierungsstreifen 1, 5 für ein Fahrgassensystem erzeugende Sämaschine 2, wobei die Markierungsstreifen 1, 5 mit festgelegten Abständen erzeugt werden, wobei die Markierungsstreifen 1, 5 einen Abstand aufweisen, der nicht einem Vielfachen der Arbeitsbreite der Sämaschine 2 entspricht. Die Markierungsstreifen 1, 5 werden dabei durch geeignete Steuerung der

Saatgutzufuhrunterbrechungselemente der Sämaschine 2 erzeugt. Darüber hinaus wird jeder zweite Markierungsstreifen 5 so angelegt, dass über seine gesamte Breite kein Saatgut ausgebracht wird, anstatt das Saatgut nur in einer für die Laufräder landwirtschaftlicher Geräte vorgesehenen Spur nicht auszusähen.

Die Markierungsstreifen 1, 5 werden von einem landwirtschaftlichen Gerät 4 angefahren, um die landwirtschaftliche Fläche zu bearbeiten. Ein landwirtschaftliches Bewässerungsgerät 7 mit einer im Vergleich dazu doppelten Arbeitsbreite fährt nur jede zweite, von einem Markierungsstreifen 5 gekennzeichnete Fahrgasse an. Das landwirtschaftliche Bewässerungsgerät 7 weist zwischen seinen Laufrädern einen geringen Abstand zum Boden auf. Dadurch würden in diesem Bereich ausgesäte Pflanzen beschädigt. Daher ist es sinnvoll mittels der Saatgutzufuhrunterbrechungselemente der Sämaschine 2 in diesem Bereich, der der Fahrwerksbreite und/oder dem Bereich zwischen den Laufrädern des landwirtschaftlichen Gerätes 4, 6, insbesondere des landwirtschaftlichen Bewässerungsgerätes 7, entspricht, kein Saatgut auszubringen, um dadurch Kosten einzusparen. Nach dem Anfahren jeder jeweils vorgesehenen Fahrgasse ist die landwirtschaftliche Fläche vollständig bearbeitet.

In allen dargestellten Fällen, insbesondere denen in Fig. 2,

Fig. 3 und Fig. 4, ist es weiterhin möglich, dass die Markierungsstreifen 1, 5 für die Fahrgassen in einem Abstand angelegt werden, der einem Vielfachen der Arbeitsbreite der Sämaschine 2 und/oder der landwirtschaftlichen Geräte 4, 6, 7 entspricht.

Die Markierungsstreifen 1, 5 sind in allen Fällen auf unterschiedliche Weisen erzeugbar. Sie sind mittels Steuerung der Saatgutzufuhrunterbrechungselemente erzeugbar, indem unterschiedliche Sämuster erzeugt werden, insbesondere durch intervallweise und/oder vollständig unterbrochene Saatgutzufuhr zu festlegbaren Säelementen. Weitere Möglichkeiten zur Erzeugung von Markierungsstreifen 1, 5 sind die Verwendung unterschiedlichen Saatgutes in den Markierungsstreifen 1, 5 und/oder die farbliche Kennzeichnung der Markierungsstreifen 1, 5.

In allen Fällen ist die Periodizität der Markierungsstreifen 1, 5 frei wählbar, so dass Markierungsstreifen 1, 5 für jeden gewünschten Fahrgassenabstand, d.h. insbesondere für jede Arbeitsbreite von landwirtschaftlichen Geräten 4, 6, 7, anlegbar sind.

Die Markierungsstreifen 1, 5 sind hier erzeugbar, indem durch das Hinterlegen der gewünschten Periodizitäten und/oder Ausgestaltung der Markierungsstreifen 1, 5 in einem Speicherelement eines Bordcomputers der Sämaschine 2 mittels der Eingabe über ein Bedienelement eines Bordcomputers eine Grundlage für die Steuerung für die Saatgutzufuhrelemente geschaffen wird. Hierzu ist ein entsprechendes Berechnungs- und/oder Steuerungsprogramm in einem Speicherelement des Bordcomputers hinterlegt.

## Patentansprüche

1. Vorrichtung zum Anlegen von Markierungsstreifen (1, 5) mit einer Sämaschine (2), die einen Vorratsbehälter und Dosierorgane aufweist, die das sich im Vorratsbehälter befindliche Saatgut in einstellbaren Mengen Säelementen zuführen, die dieses Saatgut in Reihen in den Boden ablegen, wobei in periodischer Wiederkehr in Abständen die Saatgutzufuhr zu bestimmten Säelementen durch über eine Schaltvorrichtung zu betätigende Saatgutzufuhrunterbrechungselemente abschaltbar ist, so dass Markierungsstreifen (1, 5) entstehen, die für die Laufräder von Fahrzeugen (4, 6, 7) für nachfolgende Pflanzenschutz- und/oder Düngemaßnahmen zum Befahren vorgesehen sind, **dadurch gekennzeichnet, dass** Saatgutzufuhrunterbrechungselemente beliebigen Säelementen zuordbar sind, so dass beliebige Periodizitäten für Markierungsstreifen (1, 5) erzeugbar sind, wobei die Perioden, in der Markierungsstreifen (1, 5) erstellt werden unabhängig von der Arbeitsbreite der Sämaschine (2) sind.

2. Vorrichtung nach Anspruch 1, **dadurch gekennzeichnet, dass** in einem Arbeitsgang gleichzeitig Markierungsstreifen (1, 5) unterschiedlicher Periodizitäten erzeugbar sind.

3. Vorrichtung nach zumindest einem der vorangehenden Ansprüche, **dadurch gekennzeichnet, dass** Markierungsstreifen (1, 5) unterschiedlicher Periodizität durch unterschiedliche, mittels der Saatgutzufuhrunterbrechungselemente erzeugbarer Sämuster unterscheidbar sind, wobei die Sämuster insbesondere durch das intervallweise Freihalten der Markierungsstreifen (1, 5) von Saatgut erzeugbar sind.

4. Vorrichtung nach zumindest einem der vorangehenden Ansprüche, **dadurch gekennzeichnet, dass** die Markierungsstreifen (1, 5) unterschiedlicher Periodizitäten farblich unterschiedlich kennzeichenbar sind.

5. Vorrichtung nach zumindest einem der vorangehenden Ansprüche, **dadurch gekennzeichnet, dass** die Markierungsstreifen (1, 5) unterschiedlicher Periodizitäten durch die Aussaat unterschiedlicher Saatgüter kennzeichenbar sind.

6. Vorrichtung nach zumindest einem der vorangehenden Ansprüche, **dadurch gekennzeichnet, dass** voneinander unterschiedliche und/oder unabhängige Periodizitäten für Markierungsstreifen (1, 5) über ein Bedienelement eines Bordcomputers in einem Speicherelement eines Bordcomputers hinterlegbar sind.

7. Vorrichtung nach zumindest einem der vorangehenden Ansprüche, **dadurch gekennzeichnet, dass** die Markierungsstreifen (1, 5), insbesondere die von Saatgut frei gehaltenen Bereiche, über eine Breite ausdehnbar sind, die der Fahrwerksbreite eines landwirtschaftlichen Gerätes (4, 6, 7) entspricht, das zur späteren Bearbeitung der landwirtschaftlichen Fläche vorgesehen ist, insbesondere eines landwirtschaftlichen Bewässerungsgerätes (7).
